# EUROPEAN PATENT SPECIFICATION

(11) **EP 2 233 421 B1**
(45) Date of publication and mention of the grant of the patent: **28.09.2011**
(21) Application number: 09004208.6
(22) Date of filing: 24.03.2009
(51) Int. Cl.: B65H 63/06, G01N 21/89, G01N 33/36

(54) **Method for detecting a knot and knot detector**
Verfahren zum Erkennen eines Knotens und Knotendetektor
Procédé de détection d'un noeud et détecteur de noeud

(43) Date of publication of application: 29.09.2010
(73) Proprietor: IRO AB, 523 32 Ulricehamn (SE)
(72) Inventor: Bagatin, Luca, 13900 Biella (BI) (IT); Maffeo, Andrea, 13881 Cavaglia (IT)
(74) Representative: Grünecker, Kinkeldey, Stockmair & Schwanhäusser Anwaltssozietät

(56) References cited:
- EP-A- 1 942 068
- WO-A-00/60506
- DE-B- 1 101 018
- US-A- 3 106 762
- US-A- 4 133 207

## Description

The invention relates to a method according to the preamble part of claim 1 and to a knot detector according to the preamble part of claim 5.

US 4,133,207 A (CH 597081 B) contains a transducer fixed to the leaf spring forming the spring arm. The transducer senses vibrations induced in the leaf spring by a passing knot. The transducer is a piezoelectric plate connected to wiring directly leading to the leaf spring. The knot detector is prone for generating erroneous signals caused by other irregularities of the yarn than knots. The electric wiring connected to the transducer on the leaf spring is prone to damages caused by the vibrations and undesirably influences the response behaviour of the leaf spring.

EP 1 942 068 A discloses a knot detector using a yarn catcher for laterally dislocating the yarn with respect to the yarn path upon occurrence of a knot. In one embodiment, the dislocated yarn then directly is actuating a moveable element in turn actuating a piezo element. Another embodiment is using an opto-electronic detector scanning the dislocated yarn at a predetermined position. Both embodiments respond to the position of the yarn only and are prone for erroneously generated signals as other yarn irregularities than knots frequently tend to trigger the piezo element or the opto-electronic detector. These other irregularities may be slubs or projecting fibres of the yarn, i.e. irregularities which normally should not to be detected as knots. The knot detector consists of many parts and has a delayed response behaviour as first the yarn has to be dislocated with the knot over a significant distance before the detector responds.

DE 1101018 B relates to a knot detector in which the dislocation of the other end of a leaf spring into a certain position caused by any passing irregularity of the yarn triggers an electric contact arrangement. The contact arrangement is directly mechanically actuated by the leaf spring. The direct mechanical co-action between the leaf spring and the contact arrangement is prone to malfunctions caused by unavoidable lint depositions. The knot detector tends to generate false knot signals because it is unable to differentiate between knots and other non-critical irregularities of the yarn, both dislocating the other end of the same portion.

GB 397182 C discloses a device which ruptures the yarn when a knot tends to pass the yarn passing gap. The width of the yarn passing gap is adjustable by a rotatable eccentric deflector.

WO 01/63203 A discloses a knot detector having a fork-shaped yarn guiding element defining a yarn passing gap of increasing width. A stationary detector is located distant from the yarn guiding element and serves to detect a movement of the yarn guiding element to a predetermined position induced by a knot. In case of an arriving knot, the yarn guiding element is moved away from the detector. Then the detector is generating a signal of mechanical, optical, acoustical, electrical or electromagnetic nature. The knot detector is prone to cause yarn breakages as the yarn passing gap does not yield instantaneously when a knot is arriving. An arriving knot before passing through first has to move the yarn guiding element for a long stroke to assure that the detector actually responds. Other irregularities other than a knot as well may trigger the knot detector.

Further prior art in: WO 00/60506 A, and US 3,106,762 A.

It is an object of the invention to provide a method for detecting knots and a knot detector performing with excellent response behaviour and high insensitivity against contamination, lint depositions and erroneously generated knot signals caused by other irregularities of a running yarn than knots.

This object is achieved by the features of claim 1 and of claim 5.

As a knot in the yarn intrinsically is almost a punctiform defect or irregularity of the yarn, it will result in a steep, sharp or quick position change of the spring arm. On the other hand, slubs, diameter changes, protruding yarns or collected depositions on the yarn are longer deflects or irregularities of the yarn and result in a smoother position change of the spring arm when passing through the detector gap. As according to the method the gradient of the position changes of the spring arm over time is determined, which position change may be caused by any irregularity travelling with the running yarn, and the determined gradient is then evaluated for emitting the knot signal in terms of the steepness or the time. The knot signal actually will be emitted only when a knot passes the knot detector gap, while other irregularities will be ignored by not emitting a knot signal, even if the magnitude of the position change might be the same. In other words, according to the method, the position change of the spring arm is evaluated over time in order to gain information on the type of irregularity causing the position change and so to differentiate between a true knot and not critical irregularities of the yarn. The result of the method is an excellent response behaviour paired with high insensitivity against contamination, and the elimination of erroneously generated knot signals.

The magnetic or opto-electronic position measuring device measures the position change of the other end of the spring arm caused by any irregularity travelling with the running yarn in order to find out that an irregularity passes, but reliably generates a knot signal only when a knot passes the yarn passing gap and dislocates the other end of the spring fast enough from the deflector. Other irregularities of yarn than a knot do not displace the other end of the leaf spring fast enough to trigger the knot detector. Furthermore, as the position measuring device does not directly contact the other end or the spring arm, contamination like lint depositions, dirt and the like not significantly deteriorate the response behaviour of the knot detector. The knot detector has a quick response behaviour, because the leaf spring is light weight. As a knot easily is allowed to pass the yarn passing gap by just dislocating the other end, there does not exist the danger of yarn breakages caused by the knot detector. A magnetic distance measuring device owing to the magnetic field is insensitive to contamination like dirt or lint depositions. An opto-electronic distance measuring device scanning the leaf spring without mechanical contact can either be located such that it is hardly influenced by contamination like lint deposition, or can be equipped so that a deterioration of the light transfer is compensated for or that the knot detector emits a warning signal calling for an operator's help when the light transfer conditions tend to become too bad.

According to the method a derivative signal of the position change over time of the spring arm is detected. This detected derivative signal is then compared to a derivative signal threshold representing the passage of a knot. A knot signal is generated only when the detected derivative signal is as high or higher than the pre-set derivative signal threshold. This allows to differentiate between the passage of a true knot and the passage of another yarn irregularity different from a knot, like a slub, or a diameter variation or of collected lint, respectively, through the detector gap, because the detected derivative signal resulting from a passing knot is larger than a detected derivative signal resulting from another yarn irregularity. The magnitude of the position change also may be considered, but not necessarily.

As variations of the speed of the running yarn may change the amplitude of the detected derivative signal at least for a certain extent while detecting a knot, it is expedient to compensate for variations of the amplitude of the detected derivative signal by evaluating at the same time information on the current speed of the yarn. This results in high reliability of the knot detecting method, because the knot signal will be generated independent from the yarn speed.

Expediently, the derivative signal is detected by magnetically or opto-electronically measuring the position change of the spring arm in relation to a reference position, by evaluating the time duration of the position change or the course of the position change over time, and by calculating the first derivative of the position change over time. The first derivative of the position change represents the gradient of the course of the position change and truly represents the occurrence of a passing knot because the gradient caused by a knot is steeper than the gradient caused by another irregularity travelling with the yarn like a slub, a diameter variation, or of collected lint travelling with the yarn.

In an expedient embodiment of the knot detector the evaluation circuitry contains or is linked to a compensation section for compensating yarn speed depending variations of the amplitude of the detected derivative signal on the basis of yarn speed information.

In order to gain the yarn speed information for processing it the compensation section may be connected to a yarn speed pick-up device or to a speed control unit of the yarn feeding device from which the running yarn is pulled off or which pulls off the running yarn from a yarn bobbin. The yarn speed pick-up device directly scans the yarn speed upstream or downstream or inside the knot detector. The speed control unit of the yarn feeding device anyhow permanently has the information on the yarn speed and only needs to be connected with the evaluation circuitry of the knot detector.

In a preferred embodiment, the magnetic position measuring device includes a stationary Hall element and at least one permanent magnet fixed to a leaf spring defining the spring arm. As the Hall element is responding to the strength or density of the contamination penetrating magnetic field of the permanent magnet, the position measuring device is practically insensitive for lint depositions. The hall element either has a precisely defined switching point or an extended analogous or proportional detection range for precisely measuring or following any position change of the leaf spring.

One embodiment includes a stationary opto-electronic detector responding to light intensity variations caused by the position change of the other end of the leaf spring. The opto-electronic detector can be situated in the knot detector such that its function hardly is affected by lint depositions. The opto-electronic detector may have photodiodes responding to the intensity of light e.g. reflected from the spring arm. Both solutions, the magnetic and the opto-electronic one, consist of as few parts as possible, can be manufactured for moderate costs and can be installed in various operative positions.

In an expedient embodiment the deflector surface may be the periphery of a pin extending crosswise to the running direction of the yarn. The deflector surface may be adjustable by a rotary eccenter device in order to either set a predetermined width of the detector gap or to set a predetermined contact pressure between the deflector surface and the other end of the spring arm. The rotary eccenter device allows to precisely and gradually match the detector gap e.g. to the yarn quality of the yarn running through the knot detector.

In an expedient embodiment the spring arm may be constituted by a plate-like leaf spring. The other end of the leaf spring may be bent downwardly in a direction towards the detector surface in order to form a pointed lateral edge which easily follows any irregularity of the yarn by a displacement out of the reference position. Alternatively or additively the other end may even carry a laterally extending ceramic bar-like element directly contacting the running yarn in the detector gap.

In an expedient embodiment a stop may be provided for defining the reference position of the other end of the spring arm. Expediently, the spring arm may even be preloaded against the stop such that it yields with a set force upon passage of a yarn irregularity.

The leaf spring may extend substantially parallel to the running direction along the yarn path in the knot detector. This results in a long active lever arm for the force caused by a passing irregularity in relation to the stationary fixation of the leaf spring. The other end of the leaf spring may be positioned such that it trails in running direction of the yarn behind a contact point between the running yarn and the deflector surface such that a yarn irregularity first reaches the contact point before it displaces the other end of the leaf spring.

In order to avoid malfunctions caused by contamination or the like at least a part of the magnetic or opto-electric position measuring device may be shielded from the yarn path by a magnetically or optically permeable cover.

The permanent magnet used in the magnetic position measuring device may consist of NdFeB, because this material has an excellent ratio between the magnetic flux and the weight of the permanent magnet in order to reduce the mass which has to be displaced by the yarn irregularity when passing through the detector gap.

In the knot detector using the opto-electronic position measuring device a dirt compensation system and/or a threshold switch may be provided. The dirt compensation system detects deteriorations of the light transmission conditions and either increases the sensitivity of the position measuring device or increases the light intensity, respectively. The threshold switch may respond to a critical deterioration of the light transmission conditions in order to switch-off the knot detector and/or to generate a warning signal calling for an operator's help.

Embodiments of the invention will be explained in detail with the help of the drawings. In the drawings is:
- Fig. 1: a perspective view of a yarn processing system containing a knot detector apt for carrying a method for detecting a knot in a running yarn,
- Fig. 2: a longitudinal section of a first embodiment of a knot detector containing a magnetic position measuring device, and
- Fig. 3: a longitudinal section of a knot detector containing an opto-electronic position measuring device.

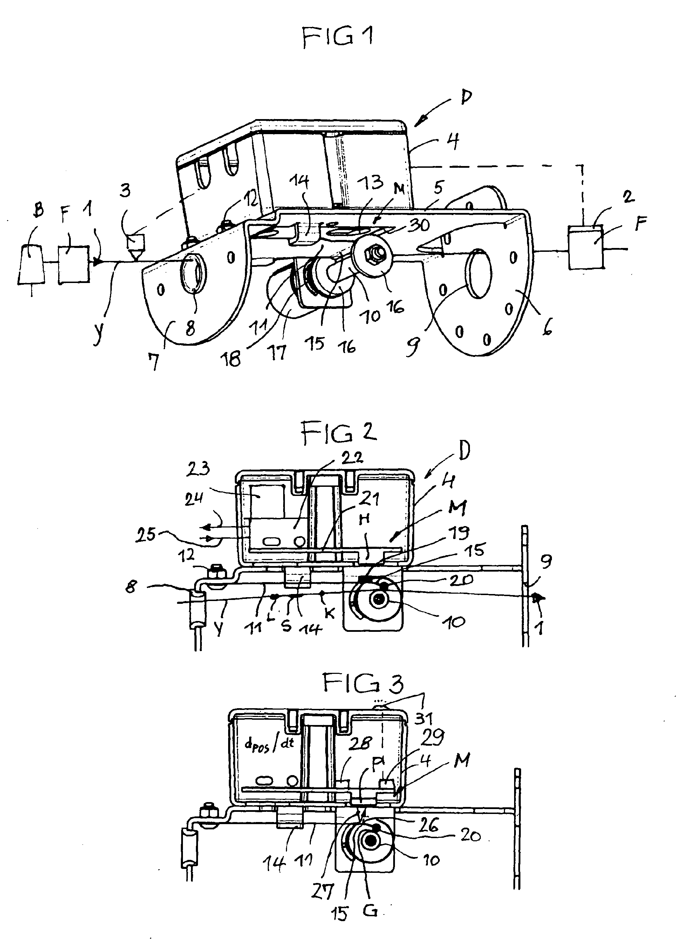

Fig. 1 schematically indicates a part of a yarn processing system, e.g. as a part of a weaving machine, a knitting machine, a warping machine, a reeling machine, or the like. In the case of a weaving machine or a knitting machine (not shown) there might be provided a yarn feeding device F which pulls off a yarn Y from a yarn bobbin B. The yarn Y then is pulled off from the feeding device F by a not shown insertion system or knitting system of the weaving machine or knitting machine.

The yarn Y runs downstream of the feeding device F through a knot detector D. In the second case in Fig. 1, the feeding device F (at the right-hand side of the yarn detector D) pulls off yarn Y from the yarn bobbin B directly through the knot detector D.

The purpose of the knot detector D is to detect a knot which may be contained in the yarn and which may cause a fabric fault in the final product. For this reason, the knot detector D upon detection of a knot either has to emit a knot signal which is registered or is taken as a reason to switch off the yarn processing system and to remove a section of the yarn containing the knot or switches off the system. The yarn Y is running in the direction of arrow 1. A feeding device F conventionally has a speed control unit 2 being informed on the current speed of the running yarn Y. Alternatively, the yarn processing system may contain a yarn speed pick-up device 3 directly scanning the yarn speed on the running yarn Y.

The yarn detector D In Fig. 1 contains either a magnetic or an opto-electronic position measuring device M (explained in more detail with reference to Figs 2 and 3). The position measuring device M is contained a housing 4 secured to a U-shaped carrier bracket 5. Downwardly extending tabs 6, 7 of the carrier bracket 5 are provided with a yarn eyelet 8 and an opening 9, both commonly defining a predetermined yarn path through the yarn detector D. On one side of the yarn path, in Fig. 1 at the bottom, a deflector surface 10 is stationarily supported at the carrier bracket 5. The deflector surface 10 is contacted by the running yarn Y such that the running yarn Y is slightly deflected over the deflector surface 10. A spring arm 11 is arranged at the other side of the yarn path opposite to the deflector surface 10. The spring arm 11, in the present case, is a plate-like leaf spring, e.g. from spring steel sheet material, and is stationarily fixed e.g. by fixation screws 12 at the lower side of the carrier bracket 5 in the region of the left-hand side tab 7. The spring arm or leaf spring 11 extends substantially parallel to the yarn path in the knot detector D and has another end 15 arranged opposite to the deflector surface 10. The other end 15 may be bent downwardly towards the deflector surface 10, and/or carries a laterally extending bar-like ceramic element 20 (Figs 2 and 3).

A part of the position measuring device M is arranged behind openings 13 in the housing 4 and in the carrier bracket 5. The openings 13 may be covered by a magnetically or optically permeable cover 30. At least one stop 14 is provided at the lower side of the carrier bracket 5 for defining a reference position of the spring arm 11. The spring arm 11 may be spring loaded against the stop 14. The deflector surface 10 is constituted by the periphery of a pin extending crosswise to the yarn path. The pin has two spaced apart lands 16 and is connected to a rotary eccenter device 17 fixed to the carrier bracket 5 in order to allow to change the elevational position of the deflector surface 10 and to set a knot detector gap G as indicated in Fig. 3 between the deflector surface 10 and the other end 15 of the spring arm 11.

As shown in Fig. 3, the position of the other end 15 of the spring arm 11 may be trailing in yarn running direction 1 somewhat behind a contact point between the running yarn Y and the deflector surface 10. The other end 15 and the deflector surface 10 define a knot detector gap G. In the reference position of the spring arm 11 the other end 15 either may contact the deflector surface 10 or may be held with a certain distance from the deflector surface 10, e.g. depending on the yarn quality or the average yarn diameter.

The knot detector in Fig. 2 is equipped with a magnetic position measuring device M, comprising a permanent magnet 19 fixed to the upper side of the spring arm 11, preferably in the region of the other end 15, and a hall element H in the housing 4. The hall element H responds by a signal to the density or strength of the magnetic field of the permanent magnet 19. An evaluation circuitry comprises a section 22 for determining a derivative signal dₚₒₛ/dt of a position change of the spring arm 11 over time in order to detect the gradient of the position change of the spring arm 11. The evaluation circuitry is or may be programmed with a pre-set derivative signal threshold presenting the passage of a knot K through the knot detector gap G, i.e. with a certain magnitude of a derivative signal. Upon determination of the derivative signal of an occurred position change, the detected derivative signal is compared to the pre-set derivative signal threshold. As soon as the determined derivative signal is as large as or larger than the pre-set derivative signal threshold, a knot signal is generated and is emitted e.g. via a signal line 24 in Fig. 2. In the case that the determined derivative signal is not as large as or weaker or smaller than the pre-set derivative signal threshold, the emission of a knot signal is suppressed. The determined derivative signal then may stem from another irregularity of the yarn Y than a knot K. Such another irregularity may be slub S or a diameter variation or a lint collection L travelling with the running yarn Y (indicated in Fig. 2).

As a knot K is a punctiform irregularity compared to a longer and smoother irregularity like a slub S or collected lint L or another diameter variation of the yarn, the position change of the spring arm 11 caused by the passing irregularity in the knot detector G will result in a smaller magnitude of the derivative signal, i.e. the position change will take place much slower than in the case of a passing knot K. The gradient is less steep or the the derivative signal caused by such knot critical irregularities of the yarn is smaller than the signal threshold. This allows the knot detector D to differentiate between a passage of a knot K and of other irregularities.

As variations of the speed of the running yarn Y may influence the amplitude of the determined derivative signal, the evaluation circuitry may comprise (Fig. 2) a compensation section 23 for compensating yarn speed depending variations of the amplitude of the detected derivative signal dₚₒₛ/dt on the basis of yarn speed information, .e.g. input via a line 25 either from the speed pick-up device 3 or from the speed control unit 2 of the yarn feeder F (Fig. 1). The sections 22, 23 as well as the hall element H may be situated on a printed circuit board 21 in the housing 4. The permanent magnet 19, preferably, consists of NdFeB. This material of the permanent magnet 19 has an excellent magnetic flux to weight ratio.

In the embodiment in Fig. 3 the derivative signal dₚₒₛ/dt is determined by the opto-electronic position measuring device M which has a photodiode arrangement P in the housing 4 and a reflecting surface 26 or even a reflector on the upper side of the spring arm 11, preferably in the vicinity of the other end 15. The photodiode arrangement P directs light beams 27 on the reflector or reflector surface 26 and receives reflected light in order to determine the position change of the spring arm 11. The opto-electronic position measuring device M comprises similar sections 22 and 23 as the embodiment in Fig. 2 for determining the derivative signal and for comparing the derivative signal with a pre-set derivative signal threshold but, in addition, may comprise a dirt compensation system 28 and/or a threshold switch 29, connected to a warning signal emitter 31.

The dirt compensation system 28 detects a deterioration of the light transmission condition and either increases the sensitivity of the opto-electronic position measuring device M and/or increases the light intensity in order to assure that the photodiode arrangement P truly scans position changes of the spring arm 11. The threshold switch 29 may respond to a critical deterioration of the light transmission conditions and may switch off the knot detector D and/or generate a warning signal at the warning signal indicator 31 of the knot detector D or in a remote monitoring station of the yarn processing system, respective, in order to call for an operator's help. An operator then may clean the respective regions of the knot detector or may initiate a cleaning cycle e.g. by pressurised air of an integrated cleaning device. Alternatively, the threshold switch 29 may even trigger a cleaning cycle of an integrated pressurised air cleaning system of the knot detector D itself.

## Claims

1. Method for detecting a knot (K) in a running yarn (Y) by an electronically operating knot detector (D), by guiding the yarn (Y) through a knot detector gap (G) bounded by a stationary surface (10) and a resiliently displaceable spring arm (11) and by responding with a knot signal to a position change of the spring arm (11) caused by the knot (K) passing through the knot detector gap (G), **characterised in that** the gradient of the position change of the spring arm (11) over time is determined, and that the determined gradient is evaluated for emitting the knot signal.

2. Method according to claim 1, **characterised in that** upon occurrence of a displacement a derivative signal (dₚₒₛ/dt) of the position change overtime of the spring arm (11) is detected, that the detected derivative signal is compared to a derivative signal threshold representing the passage of knot (K), and that a knot signal is generated when the detected derivative signal is as high or higher than the pre-set derivative signal threshold in order to differentiate between the passage of a knot (K) and the passage of a yarn irregularity different from a knot through the detector gap (G).

3. Method according to claim 2, **characterised in that** variations of the amplitude of the detected derivative signal (dₚₒₛ/dt) caused by variations of the speed of the running yarn (Y) are compensated for evaluating the by information on the current speed of the yarn (Y).

4. Method according to claim 2, **characterised in that** the derivative signal (dₚₒₛ/dt) is detected by magnetically or opto-electronically measuring the position change of the spring arm (11) in relation to a reference position, by evaluating the time duration of the position change of the spring arm (11), and by calculating the first derivative of the position change over time (d).

5. Knot detector (D) for a running yarn (Y), comprising at least one yarn guiding element (8, 9) defining a predetermined yarn path through the knot detector (D), a stationary deflector surface (10) engaging from one side into the yarn path, a spring arm (11) stationarily fixed at one end and having another end (15) placed opposite to the deflector surface (10) at a reference position at the other side of the yarn path, the deflector surface (10) and the other end (15) defining a knot detector gap (G), and an electronic signal generating device being responsive to position changes of the other end (15) of the spring arm (11), **characterised by** either a magnetic or an opto-electronic position measuring device (M) for measuring the position change of the displaced other end (15) of the spring arm (11) in relation to the reference position without mechanical contact between the spring arm (11) and the position measuring device (M), and by an evaluation circuitry (22, 23) connected to the position measuring device (M) for
a) determining a derivative signal (d(ₚₒₛ)/dt) of the position change of the other end (15) of the spring arm (11) overtime (t), and
b) emitting a knot signal upon a passage of a knot (K) by comparing the determined derivative signal (d(ₚₒₛ)/dt) with a pre-set derivative signal threshold.

6. Knot detector according to claim 5, **characterised in that** the evaluation circuitry (22, 23) contains or is linked to a compensation section for compensating yarn speed depending variations of the amplitude of the detected derivative signal (d(ₚₒₛ)/dt) on the basis of yarn speed information.

7. Knot detector according to claim 6, **characterised in that** the compensation section (23) is connected to a yarn speed pick-up device (3) or to a speed control unit (2) of a yarn feeding device (F) from which the running yarn (Y) is pulled off or which pulls off the running yarn from a yarn bobbin (B).

8. Knot detector according to claim 5, **characterised in that** the position measuring device (M) includes a stationary Hall element (H) and a permanent magnet (19) fixed to the detector spring arm (11), preferably in the vicinity of the other end (15) of the spring arm (11), the Hall element (H) responding to the strength or to the density of the magnetic field of the permanent magnet (19).

9. Knot detector according to claim 5, **characterised in that** the position measuring device (M) includes a stationary opto-electronic detector (P), preferably containing photodiodes, responding to variations of light reflected by the spring arm (11) or by a reflector (15) placed on the spring arm (11).

10. Knot detector according to claim 5, **characterised in that** the deflector surface (10) is the periphery of a pin extending crosswise to the running direction of the yarn (Y), and that the deflector surface (10) is adjustable by a rotary eccenter device (17) in order to either set a predetermined width of the detector gap (G) or to set a predetermined contact pressure between the deflector surface (10) and the other end (15) of the spring arm (11).

11. Knot detector according to at least one of claims 5 to 10, **characterised in that** the spring arm (11) is a leaf spring, that the other end (15) of the leaf spring is bent downwardly in a direction towards to the detector surface (10), and/or that the other end (15) carries a laterally extending ceramic element (20).

12. Knot detector according to claim 5, **characterised in that** a stop (14) is provided for defining the reference position of the other end (15) of the spring arm (11), the spring arm (11), preferably, being preloaded against the stop (14).

13. Knot detector according to claim 11, **characterised in that** the leaf spring extends substantially parallel to the yarn running direction along the yarn path in the knot detector (D) with the other end (15) trailing in yarn running direction behind a contact point between the running yarn (Y) and the deflector surface (10).

14. Knot detector according to claim 5, **characterised in that** at least a part of the magnetic or opto-electronic position measuring device (M) is shielded from the yarn path in the knot detector by a magnetically or optically permeable cover (30).

15. Knot detector according to claim 5, **characterised in that** the permanent magnet (19) consists of NdFeB.

16. Knot detector according to claim 5, **characterised in that** the opto-electronic position measuring device (M) includes a dirt-compensation system (28) or a threshold switch (29).

## Patentansprüche

1. Verfahren zum Detektieren eines Knotens (K) in einem laufenden Faden (Y) durch einen elektronisch betriebenen Knotendetektor (D), bei dem der Faden (Y) durch einen Knotendetektorspalt (G) geführt wird, welcher begrenzt wird durch eine stationäre Oberfläche (10) und einen nachgiebig verlagerbaren Federarm (11), und durch Ansprechen mit einem Knotensignal auf eine Positionsänderung des Federarms (11), bewirkt durch den durch den Knotendetektorspalt (G) hindurchgehenden Knoten (K), **dadurch gekennzeichnet, dass** der Gradient der Positionsänderung des Federarms (11) über der Zeit bestimmt wird, und dass zum Emittieren des Knotensignals der bestimmte Gradient ausgewertet wird.

2. Verfahren nach Anspruch 1, **dadurch gekennzeichnet, dass** nach Auftreten einer Verlagerung ein derivatives Signal (dₚₒₛ/dt) der Positionsänderung des Federarms (11) über die Zeit detektiert wird, dass das detektierte derivative Signal mit einem Schwellwert für das derivative Signal verglichen wird, welcher den Durchgang eines Knotens (K) repräsentiert, und dass ein Knotensignal generiert wird, wenn das detektierte derivative Signal so hoch wie oder höher ist als der voreingestellte Schwellwert für das derivative Signal, um zwischen dem Durchgang eines Knotens (K) und dem Durchgang einer Fadenunregelmäßigkeit, die von einem Knoten verschieden ist, durch den Knotendetektorspalt (G) zu differenzieren.

3. Verfahren nach Anspruch 2, **dadurch gekennzeichnet, dass** durch Variationen der Geschwindigkeit des laufenden Fadens (Y) bewirkte Variationen der Amplitude des detektierten derivativen Signals (dₚₒₛ/dt) durch Auswerten von Informationen über die gegenwärtige Geschwindigkeit des Fadens (Y) kompensiert werden.

4. Verfahren nach Anspruch 2, **dadurch gekennzeichnet, dass** das derivative Signal (dₚₒₛ/dt) detektiert wird durch magnetisches oder optoelektronisches Messen der Positionsänderung des Federarms (11) in Relation zu einer Referenzposition, durch Auswerten der Zeitdauer der Positionsänderung des Federarms (11), und durch Berechnen der ersten Ableitung der Positionsänderung über der Zeit (t).

5. Knotendetektor (D) für einen laufenden Faden (Y), mit zumindest einem Fadenführelement (8, 9), welches einen vorbestimmten Fadenweg durch den Knotendetektor (D) definiert, einer von einer Seite in den Fadenweg eingreifenden, stationären Deflektoroberfläche (10), einem Federarm (11), der an einem Ende stationär fixiert ist und ein anderes Ende (15) besitzt, das an der anderen Seite des Fadenweges der Deflektoroberfläche (10) gegenüberliegend an einer Referenzposition platziert ist, wobei die Deflektoroberfläche (10) und das andere Ende (15) gemeinsam einen Knotendetektorspalt (G) definieren, und einer elektronischen, signalgenerierenden Vorrichtung, die auf Positionsänderungen des anderen Endes (15) des Federarms (11) anspricht, **gekennzeichnet durch** entweder eine magnetische oder eine optoelektronische Positionsmessvorrichtung (M) zum Messen der Positionsänderung des verlagerten anderen Endes (15) des Federarms (11) in Relation zu der Referenzposition ohne mechanischen Kontakt zwischen dem Federarm (11) und der Positionsmessvorrichtung (M), und **durch** einen Auswerteschaltkreis (22, 23), der mit der Positionsmessvorrichtung (M) verbunden ist zum
a) Bestimmen eines derivativen Signals (dₚₒₛ/dt) der Positionsänderung des anderen Endes (15) des Federarms (11) über der Zeit (t), und
b) zum Emittieren eines Knotensignals bei Durchgang eines Knotens (K) **durch** Vergleichen des bestimmten derivativen Signals (dₚₒₛ/dt) mit einem voreingestellten Schwellwert für das derivative Signal.

6. Knotendetektor nach Anspruch 5, **dadurch gekennzeichnet, dass** der Auswerteschaltkreis (22, 23) eine Kompensationssektion enthält oder mit dieser verlinkt ist zum Kompensieren von fadengeschwindigkeitsabhängigen Variationen der Amplitude des detektierten derivativen Signals (dₚₒₛ/dt) auf der Basis von Fadengeschwindigkeitsinformationen.

7. Knotendetektor nach Anspruch 6, **dadurch gekennzeichnet, dass** die Kompensationssektion (23) verbunden ist mit einer Fadengeschwindigkeits-Aufnahmevorrichtung (3) oder mit einer Geschwindigkeitssteuereinheit (2) einer Fadenliefervorrichtung (F), von welcher der laufende Faden (Y) abgezogen wird oder welche den laufenden Faden (Y) von einer Fadenspule (B) abzieht.

8. Knotendetektor nach Anspruch 5, **dadurch gekennzeichnet, dass** die Positionsmessvorrichtung (M) ein stationäres Hallelement (H) und einen Permanentmagneten (19) umfasst, welcher an dem Detektorfederarm (11) fixiert ist, vorzugsweise, in der Nähe des anderen Endes (15) des Federarms (11), wobei das Hallelement (H) auf die Stärke oder die Dichte des Magnetfeldes der Permanentmagneten (19) anspricht.

9. Knotendetektor nach Anspruch 5, **dadurch gekennzeichnet, dass** die Positionsmessvorrichtung (M) einen stationären optoelektronischen Detektor (P) umfasst, der, vorzugsweise, Fotodioden enthält, die auf Variationen von Licht ansprechen, das durch den Federarm (11) oder durch einen an dem Federarm (11) platzierten Reflektor (15) reflektiert wird.

10. Knotendetektor nach Anspruch 5, **dadurch gekennzeichnet, dass** die Deflektoroberfläche (10) die Peripherie eines Stiftes ist, der sich quer zu der Laufrichtung des Fadens (Y) erstreckt, und dass die Deflektoroberfläche (10) durch eine verdrehbare Exzentervorrichtung (17) einstellbar ist, um entweder eine vorbestimmte Weite des Detektorspalts (G) oder einen vorbestimmten Kontaktdruck zwischen der Deflektoroberfläche (10) und dem anderen Ende (15) des Federarms (11) einzustellen.

11. Knotendetektor nach wenigstens einem der Ansprüche 5 bis 10, **dadurch gekennzeichnet, dass** der Federarm (11) eine Blattfeder ist, dass das andere Ende (15) der Blattfeder in einer Richtung zu der Detektoroberfläche (10) nach unten abgebogen ist, und/oder dass das andere Ende (15) ein sich in Querrichtung erstreckendes keramisches Element (20) trägt.

12. Knotendetektor nach Anspruch 5, **dadurch gekennzeichnet, dass** zum Definieren der Referenzposition des anderen Endes (15) des Federarms (11) ein Anschlag (14) vorgesehen ist, und dass der Federarm (11), vorzugsweise, gegen den Anschlag (14) vorgespannt ist.

13. Knotendetektor nach Anspruch 11, **dadurch gekennzeichnet, dass** sich die Blattfeder substantiell parallel zur Fadenlaufrichtung entlang des Fadenweges in dem Knotendetektor (D) erstreckt, wobei das andere Ende (15) in Fadenlaufrichtung hinter einem Kontaktpunkt zwischen dem laufenden Faden (Y) und der Deflektoroberfläche (10) liegt.

14. Knotendetektor nach Anspruch 5, **dadurch gekennzeichnet, dass** zumindest ein Teil der magnetischen oder optoelektronischen Positionsmessvorrichtung (M) in dem Knotendetektor durch eine magnetisch oder optisch durchlässige Abdeckung (30) gegenüber dem Fadenweg abgeschirmt ist.

15. Knotendetektor nach Anspruch 5, **dadurch gekennzeichnet, dass** der Permanentmagnet (19) aus NdFeB besteht.

16. Knotendetektor nach Anspruch 5, **dadurch gekennzeichnet, dass** die optoelektronische Positionsmessvorrichtung (M) ein Verschmutzungskompensationssystem (28) oder einen Schwellwertschalter (29) aufweist.

## Revendications

1. Procédé permettant de détecter un noeud (K) dans un fil en mouvement (Y) au moyen d'un détecteur de noeud fonctionnant de manière électronique (D), en guidant le fil (Y) au travers d'un espace de détecteur de noeud (G) délimité par une surface fixe (10) et un bras à ressort déplaçable de manière élastique (11), et en répondant par un signal de noeud à un changement de position du bras à ressort (11) provoqué par le noeud (K) traversant l'espace de détecteur de noeud (G), **caractérisé en ce que** le gradient dans le temps du changement de position du bras à ressort (11) est déterminé, et **en ce que** le gradient déterminé est évalué pour émettre le signal de noeud.

2. Procédé selon la revendication 1, **caractérisé en ce que**, en cas de déplacement, est détecté un signal dérivé (dₚₒₛ/dt) du changement de position dans le temps du bras à ressort (11), **en ce que** le signal dérivé détecté est comparé avec un seuil de signal dérivé représentant le passage d'un noeud (K), et **en ce qu'**un signal de noeud est généré lorsque le signal dérivé détecté est égal ou supérieur au seuil de signal dérivé prédéfini afin de différencier le passage, au travers de l'espace de détecteur (G), d'un noeud (K) et le passage d'un fil possédant une irrégularité de fil autre qu'un noeud.

3. Procédé selon la revendication 2, **caractérisé en ce que** des variations de l'amplitude du signal dérivé détecté (dₚₒₛ/dt), provoquées par des variations de la vitesse du fil en mouvement (Y), sont compensées pour évaluer les informations concernant la vitesse présente du fil (Y).

4. Procédé selon la revendication 2, **caractérisé en ce que** le signal dérivé (dₚₒₛ/dt) est détecté par une mesure magnétique ou optoélectronique du changement de position du bras à ressort (11) en relation avec une position de référence, en évaluant la durée du changement de position du bras à ressort (11), et en calculant la dérivée première du changement de position dans le temps (d)

5. Détecteur de noeud (D) pour un fil en mouvement (Y), comportant au moins un élément de guidage de fil (8, 9), définissant un chemin de fil prédéterminé au travers du détecteur de noeud (D), une surface de déflecteur fixe (10) s'engageant à partir d'un premier côté dans le chemin de fil, un bras à ressort (11) assujetti de manière fixe à une extrémité, et possédant une autre extrémité (15) placée à l'opposé de la surface de déflecteur (10) dans une position de référence située de l'autre côté du chemin de fil, la surface de déflecteur (10) et l'autre extrémité (15) définissant un espace de détecteur de noeud (G), et un dispositif de génération de signal électronique étant réactif à des changements de position à l'autre extrémité (15) du bras à ressort (11), **caractérisé par**, au choix, un dispositif de mesure de position magnétique ou optoélectronique (M), destiné à mesurer le changement de position de l'autre extrémité déplacée (15) du bras à ressort (11) en relation avec la position de référence, sans contact mécanique entre le bras à ressort (11) et le dispositif de mesure de position (M), et par un circuit d'évaluation (22, 23) connecté au dispositif de mesure de position (M), pour
a) déterminer un signal dérivé (dₚₒₛ/dt) du changement de position de l'autre extrémité (15) du bras à ressort (11) dans le temps (t), et
b) émettre un signal de noeud lors d'un passage d'un noeud (K) en comparant le signal dérivé déterminé (dₚₒₛ/dt) avec un seuil de signal dérivé prédéfini.

6. Détecteur de noeud selon la revendication 5, **caractérisé en ce que** le circuit d'évaluation (22, 23) contient une section de compensation, ou est relié à une section de compensation destinée à compenser la vitesse de fil en fonction des variations de l'amplitude du signal dérivé détecté (dₚₒₛ/dt) en se basant sur des informations de vitesse de fil.

7. Détecteur de noeud selon la revendication 6, **caractérisé en ce que** la section de compensation (23) est connectée à un dispositif de lecture de vitesse de fil (3) ou à une unité de commande de vitesse (2) d'un dispositif d'alimentation en fil (F) à partir duquel est extrait le fil en mouvement (Y), ou permettant d'extraire le fil en mouvement d'une bobine de fil (B).

8. Détecteur de noeud selon la revendication 5, **caractérisé en ce que** le dispositif de mesure de position (M) comporte un élément fixe à effet Hall (H) et un aimant permanent (19), fixé au bras à ressort de détecteur (11), préférablement au voisinage de l'autre extrémité (15) du bras à ressort (11), l'élément à effet Hall (H) répondant à la force ou à la densité du champ magnétique de l'aimant permanent (19).

9. Détecteur de noeud selon la revendication 5, **caractérisé en ce que** le dispositif de mesure de position (M) comporte un détecteur optoélectronique fixe (P), contenant préférablement des photodiodes, répondant à des variations de lumière réfléchies par le bras à ressort (11) ou par un réflecteur (15) placé sur le bras à ressort (11).

10. Détecteur de noeud selon la revendication 5, **caractérisé en ce que** la surface de déflecteur (10) est la périphérie d'une épingle se prolongeant en travers de la direction de mouvement du fil (Y), et **en ce que** la surface de déflecteur (10) est réglable au moyen d'un dispositif rotatif excentrique (17) afin, au choix, de définir une largeur prédéterminée de l'espace de détecteur (G), ou de définir une pression de contact prédéterminée entre la surface de déflecteur (10) et l'autre extrémité (15) du bras à ressort (11).

11. Détecteur de noeud selon l'une au moins des revendications 5 à 10, **caractérisé en ce que** le bras à ressort (11) est un ressort à lames, **en ce que** l'autre extrémité (15) du ressort à lames est courbée vers le bas dans une direction orientée vers la surface de détecteur (10), et/ou **en ce que** l'autre extrémité (15) porte un élément de céramique se prolongeant latéralement (20).

12. Détecteur de noeud selon la revendication 5, **caractérisé en ce qu'**une butée (14) est placée pour définir la position de référence de l'autre extrémité (15) du bras à ressort (11), le bras à ressort (11), préférablement, étant préalablement chargé contre la butée (14).

13. Détecteur de noeud selon la revendication 11, **caractérisé en ce que** le ressort à lames se prolonge de manière sensiblement parallèle à la direction de mouvement du fil le long du chemin de fil, dans le détecteur de noeud (D), l'autre extrémité (15) courant dans la direction de mouvement du fil, derrière un point de contact situé entre le fil en mouvement (Y) et la surface de déflecteur (10).

14. Détecteur de noeud selon la revendication 5, **caractérisé en ce qu'**une partie au moins du dispositif de mesure de position magnétique ou optoélectronique (M) est blindé vis-à-vis du chemin de fil du détecteur de noeud au moyen d'un capot magnétiquement ou optiquement perméable (30).

15. Détecteur de noeud selon la revendication 5, **caractérisé en ce que** l'aimant permanent (19) est constitué de NdFeB.

16. Détecteur de noeud selon la revendication 5, **caractérisé en ce que** le dispositif de mesure de position optoélectronique (M) comporte un système de compensation d'encrassement (28) ou un interrupteur de seuil (29).
